# EUROPÄISCHE PATENTSCHRIFT

(11) **EP 1 807 687 B1**
(45) Veröffentlichungstag und Bekanntmachung des Hinweises auf die Patenterteilung: **13.09.2017**
(21) Anmeldenummer: 04762352.5
(22) Anmeldetag: 07.07.2004
(51) Int. Cl.: G01L 5/00, G01L 1/26, G01L 1/22, G01L 5/16

(54) **KRAFTMESSELEMENT**
FORCE SENSING ELEMENT
ELEMENT DE MESURE DE FORCE

(43) Veröffentlichungstag der Anmeldung: 18.07.2007
(73) Patentinhaber: ROBERT BOSCH GMBH, 70442 Stuttgart (DE)
(72) Erfinder: MUNZ, Michael, 72764 Reutlingen (DE); DUKART, Anton, 70839 Gerlingen (DE); GRUTZECK, Helmut, 72127 Maehringen (DE); HAEUSSERMANN, Conrad, 72820 Sonnenbuehl (DE); KASTEN, Klaus, 72762 Reutlingen (DE); SCHILLER, Uwe, 72074 Tuebingen (DE)
(86) Internationale Anmeldenummer: PCT/DE2004/001454
(87) Internationale Veröffentlichungsnummer: WO 2006/005273

(56) Entgegenhaltungen:
- WO-A-00/16054
- DE-A- 19 960 786

## Beschreibung

### Stand der Technik

Die Erfindung geht aus von einer Schraube als Kraftmesselement nach der Gattung des unabhängigen Patentanspruchs.

Aus DE 100 12 983 A1 ist ein Kraft-Momenten-Sensor bekannt, bei dem drei Kraftmessrohre im Winkel von 120° zueinander angeordnet sind. Die Kraftmessrohre sind über je ein dem Gehäusemittelpunkt zugewandten Ende mit dem Gehäuseboden fest verbunden. Sie nehmen über die anderen freien Enden je einen Schraubbolzen auf, der in der Seitenwand des Gehäusedeckels eingesetzt ist. Nur Kräfte quer zu den Kraftmessrohren übertragen kann. Die Kraftmessrohre sind nahe den fest eingespannten Enden mit zwei rechtwinklig zueinander angeordneten Querbohrungen versehen, die den Rohrquerschnitt auf 4 Stege reduzieren. Dort werden Dehnmessstreifen fixiert, zur Messung der auf das Kraftmessrohr übertragenen Querkraft nach Betrag und Richtung, wobei je zwei gegenüberliegende Dehnmessstreifen eine Komponente dieser Querkraft messen. Über die insgesamt 6 so bestimmten Lagerkraftkomponenten kann die resultierende von außen einwirkende Last bestehend aus je drei Kraft- und Momentenkomponenten berechnet werden.

Die DE 199 60 186 A1 zeigt einen Radialkraftaufnehmer mit den Merkmalen des Oberbegriffs des Anspruchs 1.

Aus der WO 00/16054 A1 zeigt einen Kraftfahrzeugsitz mit integrierter Belegungserkennung. Zur Belegungserkennung wird mit einem Messaufnehmer eine vertikale Verschiebung zwischen einem Obergestell und einem Untergestell des Fahrzeugsitzes gemessen. Dieser Messaufnhemer besteht aus einem Bolzen und einem Kopf, der zur Kraftmessung ein elastisches Element enthält.

Aus der DE 101 11 020 A1 ist ein Verbindungselement (5) mit einem länglichen Schaft (19), insbesondere eine Schraube oder ein Bolzen, zur Verbindung zweier Körper bekannt, wobei der Schaft (19) zumindest bereichsweise einen Schlitz (14) und eine Ausnehmung (13) aufweist. Weiter ist vorgesehen, dass in dem Bereich der Ausnehmung (13) ein ein Magnetfeld erzeugendes Bauteil (10) und davon beabstandet ein magnetisch sensitives Element (11) angeordnet ist. Das vorgeschlagene Verbindungselement eignet sich insbesondere zur Erfassung einer auf den Sitz eines Fahrzeuges einwirkenden Kraft oder mechanischen Spannung.

### Vorteile der Erfindung

Die erfindungsgemäße Schraube als Kraftmesselement mit den Merkmalen des unabhängigen Patentanspruchs hat dem gegenüber den Vorteil, dass eine erheblich einfachere Konstruktion zur Messung der Kraft verwendet wird. Die Schraube als Kraftmesselement kann leicht in einer Massenproduktion hergestellt werden und kann leicht beispielsweise in Sitzen zur Gewichtskraftmessung eingesetzt werden. Es ist möglich, die Schraube als Kraftmesselement jedoch auch an anderen Geräten zur Kraftmessung einzusetzen. Die erfindungsgemäße Schraube als Kraftmesselement ermöglicht auch die Momentenmessung, wobei das Kraftmesselement entweder eine Schraube oder ein Bolzen sein kann und damit mit einem minimalen Bauraum auskommt.

Als Messprinzip zur Kraftmessung wird dabei eine Membran verwendet, die in der Mitte von einem Bolzen gehalten wird und die außen mit einer Hülse umfasst ist. Die Hülse wird dabei so gestaltet, dass sie den Kraftsensor bei Überlast schützt. Ein weiterer Vorteil dabei ist, dass nur eine geringe erforderliche Dichtungsfläche, das ist der Spalt zwischen der Hülse und dem Bolzen bzw. der Schraube erforderlich ist. Entscheidend ist, dass es auf der Membran dehnungsintensive Bereiche gibt, an denen eine Sensorik zur Messung der Dehnung angebracht ist, wobei die Dehnung ein Maß für die Kraft ist. Diese dehnungsintensiven Bereiche sollten vorzugsweise aus einem hochfesten Material wie z. B. einem hochfesten Stahl sein, während die restlichen Elemente mit einem weniger festen Material ausgebildet sein können. Idealerweise sollte die Kraft derart auf die Hülse aufgebracht werden, dass die Kraftrichtung senkrecht zum Bolzen ist. Es ist jedoch möglich, dass die Kraft in einem anderen Winkel auf die Hülse aufgebracht wird, wobei dann die erfindungsgemäße Schraube als Kraftmesselement im Wesentlichen die Kraftkomponente senkrecht zum Bolzen misst, die die Dehnung an der Membran im wesentlichen verursacht.

Die Applizierung bzw. Aufbringung der dehnungsmessenden Sensorik ist besonders einfach, da sich diese in einer Ebene befinden. So können auch Dünnschichtverfahren zum Aufbringen der dehnungsmessenden Sensorik verwendet werden. Die dehnungsmessende Sensorik kann aus mehreren dehnungsmessenden Elementen bestehen.

Durch die in den abhängigen Ansprüchen aufgeführten Maßnahmen und Weiterbildungen sind vorteilhafte Verbesserungen der im unabhängigen Patentanspruch angegebenen Schraube möglich.

Besonders vorteilhaft ist, dass die erfindungsgemäße Schraube einstückig ausgeführt werden kann. Dies ermöglicht eine besonders einfache Herstellung der erfindungsgemäßen Schraube. Insbesondere kann dabei die Schraube rotationssymmetrisch ausgeführt sein, wobei leichte Abweichungen von der Rotationssymmetrie die Funktion der Schraube nicht beeinflussen. Die Ausführung der Schraube als Kraftmesselement ermöglicht den besonders einfachen Einbau des Kraftmesselements in verschiedenen Anwendungen, beispielweise um die auf ein Fahrzeugsitz aufgebrachte Gewichtskraft zu messen.

Es ist von Vorteil, dass die dehnungsmessende Sensorik Dehnmessstreifen aufweist, die vorzugsweise in einer Wheatstoneschen Brücke geschaltet sind, um eine genaue Messung zu ermöglichen. Alternativ ist es möglich, dass die Sensorik piezoresistive Elemente aufweist, um über den piezoresistiven Defekt die Dehnung zu messen. Diese Elemente können in einem Dünnschichtverfahren auf die Membran des Kraftmesselements aufgebracht werden.

In einer Weiterbildung ist vorgesehen, dass eine Schwinge zur Krafteinleitung dient. Dies ermöglicht eine definierte Krafteinleitung. Die Schwinge ist dabei mit der Hülse in Wirkverbindung.

Weiterhin kann vorgesehen sein, dass zwischen einer Schwinge und der Schraube eine Gelenkpfanne vorgesehen ist, um eine Entkopplung von Momenten in X-, Y- und Z-Richtung zu erreichen. Wird die Schwinge verwendet und auch eine feste Einspannung des Kraftmesselements zur Kraftableitung, dann können einige oder alle Momente vom Kraftmesselement entkoppelt werden. Zwischen der Hülse und dem Bolzen kann in dem Zwischenraum ein Ring zur Kraftbegrenzung vorgesehen sein.

Anstatt die erfindungsgemäße Schraube einstückig auszuführen, ist es möglich, Hülse, Bolzen und Membran durch Fügestellen zu verbinden. Als Fügetechnik kann beispielsweise Schweißen verwendet werden. Dabei ist es insbesondere möglich, unterschiedliche Materialien für Hülse, Membran und Bolzen zu verwenden. Auch die Herstellungstechnik kann damit noch weiter vereinfacht werden. Die Fügestellen sind dabei leicht zugänglich und ermöglichen somit ein einfaches Verbinden der Komponenten. Die Fügestellen zwischen der Hülse und der Membran sowie der Membran und dem Bolzen können zu einander versetzt sein. Dies ermöglicht eine noch einfachere Fertigung der erfindungsgemäßen Schraube.

Weiterhin ist es von Vorteil, dass die Schraube durch eine entsprechende Gestaltung des Bolzens, der Membran und der Hülse nach innenzeigende Freiräume aufweist, um die dehnungsintensiven Bereiche auf der Membran noch besser und empfindlicher zu gestalten. Dies ermöglicht einen größeren Hub in der Dehnung in Abhängigkeit von der Kraft und damit eine bessere Messung der Kraft.

Vorteilhafterweise kann das Membranelement lediglich ringförmig ausgeführt sein, um damit nur in den dehnungsintensiven Bereichen angeordnet zu sein, was einen Materialersparnis des hochfesten Materials bedeutet.

Schließlich können die Fügestellen auch ringförmig ausgeführt sein, was eine besonders einfache Fertigung der erfindungsgemäßen Schraube bedeutet. Dabei kommt dann die ringförmige Membran zum Einsatz.

### Zeichnung

Ausführungsbeispiele der Erfindung sind in der Zeichnung dargestellt und werden in der nachfolgenden Beschreibung ausführlich beschrieben.

### Es zeigen

Figur 1a eine Vorderansicht der erfindungsgemäßen Schraube,
Figur 1b eine Seitenansicht im Schnitt,
Figur 1c einen Schnitt durch der erfindungsgemäßen Schraube,
Figur 2a einen seitlichen Schnitt der Schraube im montierten Zustand,
Figur 2b einen Schnitt durch die Schraube,
Figur 3a eine Schraube mit Gelenkpfanne,
Figur 3b den entsprechenden Schnitt durch die Schraube,
Figur 4 eine Seitenansicht im Schnitt,
Figur 5 eine zweite Seitenansicht im Schnitt,
Figur 6 eine dritte Seitenansicht im Schnitt,
Figur 7a eine Draufsicht,
Figur 7b eine vierte Seitenansicht im Schnitt,
Figur 8 eine weitere Vorderansicht mit einer Variation der dehnungsmessenden Elemente,
Figur 9 eine weitere Vorderansicht mit einer weiteren Variation der dehnungsmessenden Elemente,
Figur 10 eine weitere Vorderansicht mit einer weiteren Variation der dehnungsmessenden Elemente und
Figur 11 eine fünfte Seitenansicht im Schnitt.

### Beschreibung

Bei bekannten Kraftsensoren werden S- oder stabförmige Elemente eingesetzt, die sich bei Kraft- oder Momenteneinwirkung verformen. Nachteilig an diesen Formen ist der große Bauraum und die schwierige Integrierbarkeit in bisherigen Befestigungselemente wie Schrauben oder Bolzen.

Erfindungsgemäß wird eine Schraube als Kraftmesselement vorgeschlagen, die eine Kraft- und/oder Momentenmessung mit einer speziellen Gestaltung ermöglicht. Die Schraube besteht aus einfachen geometrischen Elementen, die sich einfach fertigen lassen und einen minimalen Bauraum ermöglichen.

Die Platzierung der dehnungsmessenden Sensorik, denn über die Dehnung wird die Kraft mit dem Kraftmesselement gemessen, gewährleistet, das nur Kräfte hauptsächlich in einer Richtung sensiert werden können.

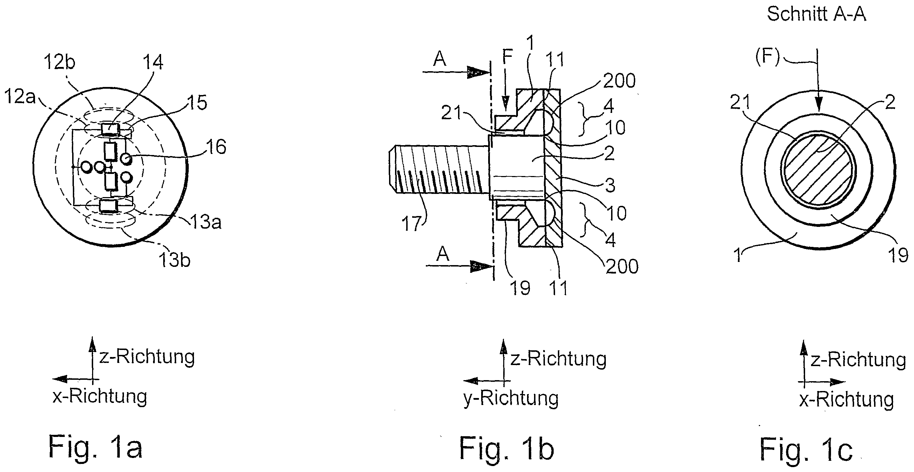

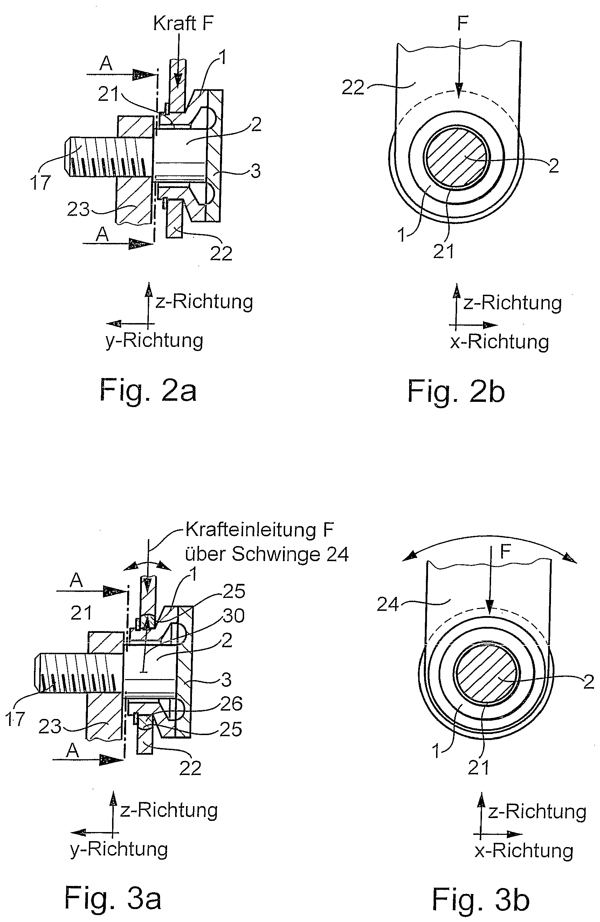

Den grundsätzlichen Aufbau der Schraube als Kraftmesselement zeigen Figur 1a und b. Die Schraube besteht im Wesentlichen aus rotationssymmetrischen Teilen, wobei leichte Abweichung von der Rotationssymmetrie die Funktion nicht beeinflussen. Figur 1a zeigt eine Vorderansicht der Schraube. In der Vorderansicht ist lediglich die Membran 3 mit den aufgebrachten dehnungsabhängigen Widerständen 14 und die sie verbindenden Leitungen 15 sowie der elektrischen Anschlüsse 16 zu sehen. Die dehnungsabhängigen Widerstände 14 sind zum einen in einem Bereich 12a angeordnet, der bei Lastaufbringung unter Zugspannung steht. Zum anderen sind sie in einem Bereich 13a angeordnet, der bei Lastaufbringung unter Druckspannung steht. Der Bereich 12a ist der Zugspannungsbereich, während der Bereich 13a der Druckspannungsbereich bei der gezeigten Kraftwirkungsrichtung F ist. Wirkt die Kraft F in entgegengesetzter Richtung als gezeigt, so wechseln Zug in Druck und Druck in Zug. Zur Messung der aus der Spannung resultierenden Dehnungen wird jeweils ein Widerstand verwendet. Zwischen diesen beiden Bereichen sind jeweils zwei weitere Widerstände angeordnet, die in einem wenig dehnungsintensiven Bereich auf der Membran 3 platziert sind. Damit ist es möglich, durch die Schaltung dieser Widerstände 14 in einer Wheatstoneschen Brücke eine sehr exakte Messung durch Auswertung der Differenzspannung zu erzielen. Es sind auch andere Brücken- bzw. Auswerteschaltungen möglich. Die elektrischen Anschlüsse 16 werden mit Auswerteschaltkreisen, wie beispielsweise einen Mikrocomputer verbunden. Dieser Mikrocomputer kann in einem Kraftfahrzeug vorzugsweise in einem Steuergerät angeordnet sein. Bei den Figuren 1a, b und c geben jeweils die unten angeordneten Koordinatensysteme die Richtung an. Dies gilt auch für die Figuren 2a, 2b, 3a, 3b und 8.

Figur 1b zeigt eine Seitenansicht im Schnitt der erfindungsgemäßen Schraube. Die Schraube weist einen Bolzen auf, der ein Gewindeteil 17 mit der Membran 3 verbindet. Die Membran 3 hat einen größeren Durchmesser als der Bolzen 2 und ist in ihren Außenbereichen mit einer Hülse 1 verbunden, die ebenfalls rotationssymmetrisch wie die Membran 3 und der Bolzen 2 und der Gewindeteil 17 sind. Die Membran 3 weist im äußeren Drittel jeweils Aushebungen 200 auf, die dann die dehnungsintensiven Bereiche 4 definieren. Die Hülse 1 weist hier einen Absatz 19 auf, auf den die Kraft F senkrecht zur Längsrichtung des Bolzens 2 bzw. des Gewindeteils 17 aufgebracht wird. Zwischen der Hülse 1 und dem Bolzen 2 ist ein Zwischenraum 21 definiert, der durch die Aufbringung der Kraft F verkleinert wird, so dass sich die dehnungsintensiven Bereiche 4 unter Druck- bzw. Zugspannung befinden. Die Hülse 1 und die Membran 3 sind über eine Fügestelle 11 miteinander verbunden. Die Membran 3 und der Bolzen 2 sind über eine Fügestelle 10 miteinander verbunden. Als Fügetechnik kann hier die Schweißtechnik verwendet werden.

Figur 1c zeigt einen Schnitt durch die Schraube an der markierten Stelle A, so dass der Schnitt durch den Bolzen 2 geht, aber nicht die Hülse 1 schneidet. Daher kann im Schnitt A-A in Figur 1c der Bolzen 2, der Zwischenraum 21 und die Hülse 1 gesehen werden. Die Hülse 1 zeigt auch den Absatz 19, der durch die weitere innere Kreislinie definiert ist.

Die Krafteinleitung erfolgt über den Absatz 19 auf die Hülse 1 mit der Kraft F. Hierdurch wird ein Moment im Kraftmesselement erzeugt. Dieses Moment wirkt zwischen Hülse 1 und dem Bolzen 2 mit der dazwischen befindlichen Membran 3, die durch die Momenteneinleitung verwunden wird. Auf dem sich stark dehnenden ringförmig umlaufenden Teil der Membran 4, werden dehnungs- bzw. spannungsmessende Elemente, z. B. Dehnmessstreifen, piezoresistive Strukturen oder Dünnfilmstrukturen aufgebracht.

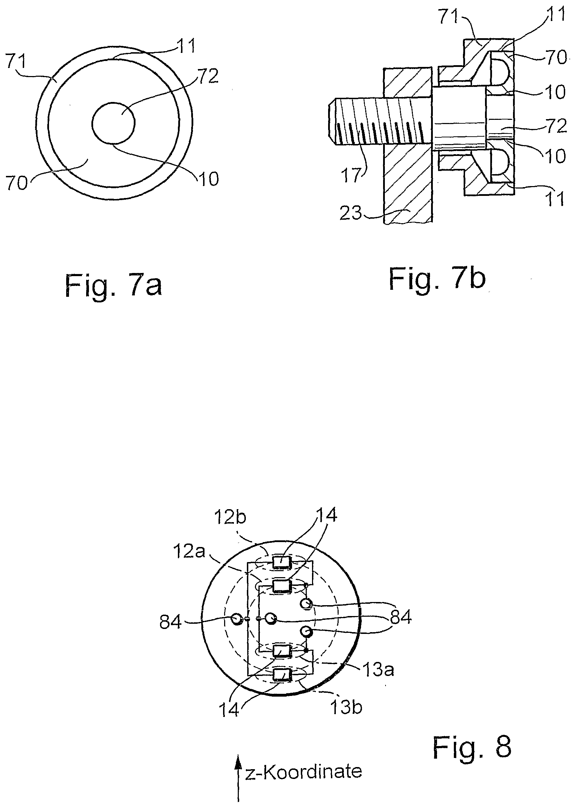

Figur 8, 9 und 10 zeigen Variationen der Anordnung der dehnungsmessenden Elemente. Der Vorteil dieser Anordnungen ist die Veränderung des Widerstandes aller vier Widerstände. Zwei liegen in einem unter Zugspannung stehenden Bereich, die restlichen zwei in einem unter Druckspannung stehenden Bereich.

Figur 8 zeigt dehnungsmessende Elemente, die jeweils am Rand des dünnwandigen Membranbereiches angeordnet sind. Dabei sind die Widerstände 14 im Bereich 12a, 13b unter Zugspannung, wenn die Lastaufbringung in die negative Z-Richtung erfolgt. Die Widerstände 14 im Bereich 12b, 13a sind dabei unter Druckspannung. Die Anschlüsse 84 führen zu der Messauswertung. Auch hier sind die dehnungsabhängigen Widerstände 12a, 12b, 13a, 13b in einer Wheatstoneschen Brücke geschaltet.

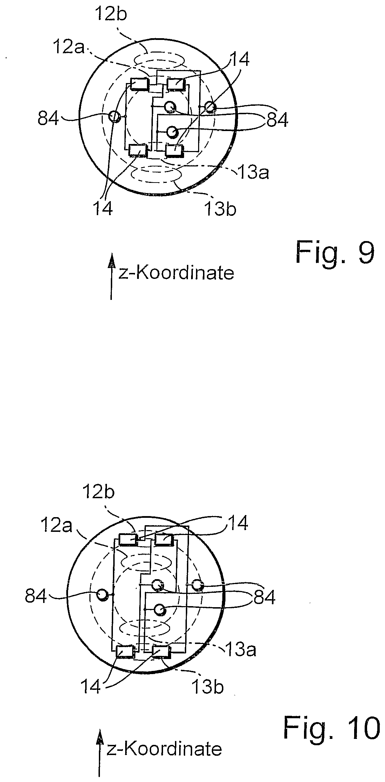

Figur 9 zeigt eine weitere Variation, die nur den Bereich 12a und 13a ausnutzt. Hier liegen die Widerstände 14 so, dass eine Kraft in negativer z-Richtung eine *Zug*spannung im Bereich 12a bewirkt und eine *Druck*spannung in 13a.

Eine ähnliche Anordnung ist auch mit dem Bereich 12b bzw. 13b möglich. Dies wird in Figur 10 gezeigt. Hier liegen die Widerstände 14 so, dass eine Kraft in negativer z-Richtung eine *Druck*spannung im Bereich 12b bewirkt und eine *Zug*spannung in 13b.

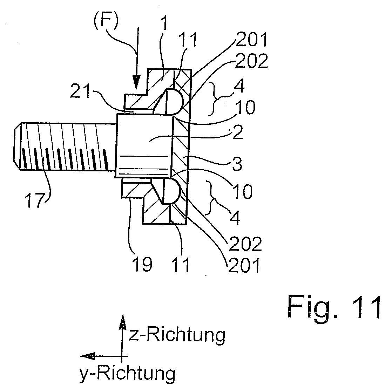

Die Aushebung 200 kann kreisförmig gestaltet sein. Dabei kann der Radius dieser Kreisform überall gleich sein. Eine Variation zeigt Fig 11. Hier ist wieder der Bolzen 2 über die Membran 3 mit der Hülse 1 verbunden. Zur Optimierung des Messsignals kann der zum Bolzen 2 zeigende Anteil einer Teilkreisform 202 einen anderen vorzugsweise größeren Radius aufweisen als der zur Hülse 1 zeigende Anteil der Teilkreisform 201. Durch diese Gestaltung ist es möglich für die oben gezeigten Anordnungen der dehnungsmessenden Elemente die Dehnungsverteilung so anzupassen, dass das Messsignal der dehnungsmessenden Elemente maximal empfindlich auf die Einwirkung der Kraft F reagieren. Die Teilkreisformen können dabei auch durch parabelförmige, splineförmige oder andere Funktionen angenähert bzw. optimiert werden.

Die Kraft kann über eine feste Einsspannung abgeleitet werden.

Dies wird in Figur 2 gezeigt. Gleiche Elemente werden hier mit gleichem Bezugszeichen wie in Figur 1 bezeichnet. Nunmehr ist eine feste Einspannung 23 gezeigt, die beispielsweise durch ein Einschrauben des Gewindeteils 17 in ein Gewinde erfolgen kann. Zusätzlich ist in Figur 2a, die auch eine weitere Seitenansicht im Schnitt des Kraftmesselements zeigt (Figur 2b), eine Schwinge 22 gezeigt, die zur Einleitung der Kraft dient. Hier wird also über die Schwinge 22 die Kraft eingeleitet und über die feste Einspannung 23 die Kraft abgeleitet. Prinzipiell ist es möglich, die Einspannung 23 und die Schwinge 22 zu vertauschen. Die Schwinge entkoppelt die Momente um die Y-Achse der Schraube.

Figur 2b zeigt wiederum einen Schnitt durch die Schraube an der bezeichneten Stelle a, wobei hier neben dem Bolzen 2 und dem Zwischenraum 21 die Hülse 1 mit dem Absatz 19 zu sehen ist, sowie die Schwinge 22.

Figur 3 zeigt im Bild a wiederum eine Seitenansicht der Schraube im Schnitt, wobei hier wiederum gleiche Teile mit gleichen Bezugszeichen bezeichnet werden. Hier wird jedoch eine umgestaltete Schwinge 24 und Hülse 1 verwendet. Die Hülse kann einen Freiraum 31 aufweisen, um der Schwinge 24 in Drehrichtung 32 das nötige Spiel zu geben.

Die Drehrichtung 32 in Figur 3a und 3b zur Momentenentkoppelung in alle Raumachsen sind beispielsweise durch Gelenkpfannen 25 an der Schwinge 24 ermöglicht. Die Gelenkpfanne kann aus zwei ineinander greifenden Elementen bestehen, die jeweils eine kugelförmige Oberfläche 25 mit, in Figur 3a gezeigten, gleichem Mittelpunkt M und gleichem Radius 30 aufweisen. Die kugelförmige Fläche der Schwinge 24 zeigt nach innen (zur Mitte M), die kugelförmige Fläche des Lagers 26 nach außen vom Mittelpunkt M weg. Beide Flächen zueinander können ein leichtes Spiel aufweisen, um die Drehbewegung zu ermöglichen.

Figur 3b zeigt wiederum den Schnitt an der markierten Stelle A, wobei lediglich der Bolzen 2 geschnitten ist und eine Vorderansicht der Hülse 1 der Schwinge 24, die beweglich um die X-, Y-, Z-Achse mit der Gelenkpfanne 25.

Im allgemeinen kann, wenn die Kraft über Zwischenelemente auf die Schraube eingeleitet wird, eine Entkopplung von Momenten erfolgen, wenn diese Zwischenelemente als Gelenk ausgeführt werden.

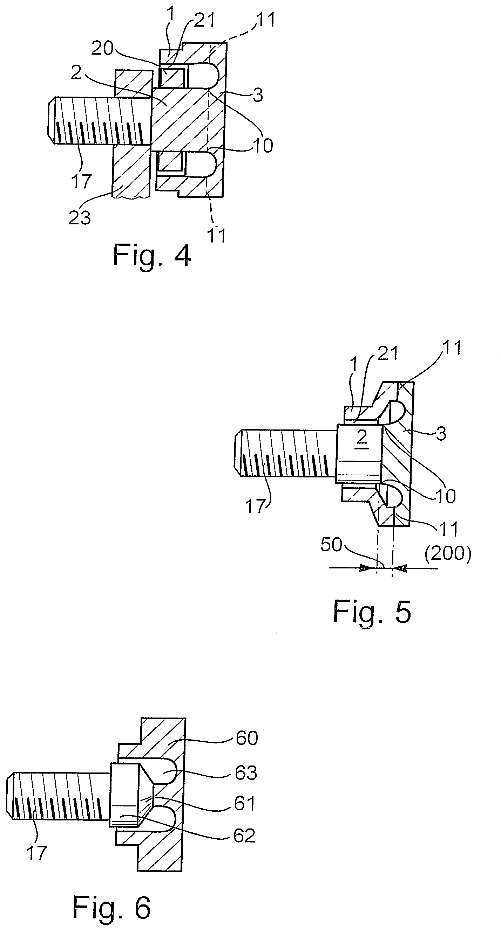

Figur 4 zeigt eine weitere Seitenansicht im Schnitt. Wiederum ist der Gewindeteil 17 in der festen Einspannung 23 verschraubt, der Bolzen 2 ist mit der Membran 3 über die Fügestelle 10 verbunden und die Membran 3 über die Fügestellen 11 mit der Hülse 1. Zusätzlich ist hier am Bolzen 2 ein Abstandsring 20 angebracht, der als Kraftbegrenzung dient. Ist der Abstand 21 durch die aufgebrachte Kraft auf die Hülse 1 auf 0 verringert, liegt also die Hülse 1 auf dem Abstandsring 20 auf, dann kommt es zur Kraftbegrenzung, da keine weitere Kraft mehr aufgebracht werden kann und zu keiner weiteren Dehnung führt. Diese Funktion wird in den restlichen Figuren durch entsprechend gewählte Maße realisiert. Das Besondere an dieser Ausführung ist, dass die Fügestellen 10 und 11 entfallen können und die Schraube einfach aus einem Stück gefertigt werden kann. Dies ist möglich, da vor dem Aufbringen des Abstandsringes der Innenraum 63 für die Bearbeitung vereinfacht zugänglich ist.

Figur 5 zeigt eine weitere Seitenansicht im Schnitt. Nunmehr sind die Fügestellen 11 und die Fügestellen 10 nicht mehr wie in Figur 4 in einer Ebene, sondern versetzt zueinander. Der Versatz 50 ermöglicht eine bessere Fertigung der erfindungsgemäßen Schraube.

Figur 6 zeigt die Schraube mit einer einstückigen Membran und Hülse 60, die wie auch der Bolzen 62 mit der Phase 61 derart geformt sind, dass Freiräume 63 zur Herstellung der dehnungsintensiven Bereiche nach innen geformt sind. Die Fügestellen 10 und 11 dienen wieder zu Verbindung von Bolzen 1 Membran 60 und Bolzen 62.

Figur 7a zeigt ein weiteres Ausführungsbeispiel der erfindungsgemäßen Schraube. Hier sind zwei ringförmige Fügestellen 10 und 11 vorgesehen, die es ermöglichen, dass die Membran 70 ringförmig ist. Der Bolzen 72 ist daher an der Oberfläche zu sehen, wie auch die ringförmige Hülse 71. Dies ermöglicht einen sparsamen Einsatz des für die Membran 70 zu verwendenden Materials, also ein hochfester Stahl. Figur 7b zeigt ein Seitenansicht im Schnitt dieses Ausführungsbeispiels. Hierbei ist zu sehen, dass die Schraube mit der ringförmigen Membran 70 und wiederum den Gewindeteil 17 in einer festen Einspannung 23 zugeordnet ist.

## Patentansprüche

1. Schraube mit
einem Bolzen (2),
einer Membran, die in der Mitte von dem Bolzen gehalten wird und die außen mit einer Hülse umfasst ist,
auf die quer zur Längsrichtung des Bolzens (2) eine zu messende Kraftkomponente aufbringbar ist, wobei
die Hülse (1) derart zum Bolzen (2) beabstandet ist, dass die Membran (3) in Abhängigkeit von der Kraftkomponente gedehnt wird, wobei
auf der Membran (3) eine Sensorik (14 bis 16) zur Messung der Dehnung vorgesehen ist.

2. Schraube nach Anspruch 1, **dadurch gekennzeichnet, dass** die Schraube mit Bolzen (2) mit der Membran (3) und mit der Hülse (1) einstückig ausgeführt ist.

3. Schraube nach einem der vorherigen Ansprüche, **dadurch gekennzeichnet, dass** dies Sensorik (14 bis 16) Dehnungsmessstreifen zur Messung der Dehnung aufweist.

4. Schraube nach Anspruch 1, **dadurch gekennzeichnet, dass** die Sensorik piezoresistive Elemente zur Messung der Dehnung aufweist.

5. Schraube nach Anspruch 3 oder 4, **dadurch gekennzeichnet, dass** die Sensorik mittels Dünnfilmtechnik aufgebracht ist.

6. Schraube nach Anspruch 3, 4 oder 5, **dadurch gekennzeichnet, dass** dies Sensorik eine Wheatstonesche Brücke als eine Schaltung aufweist.

7. Schraube nach Anspruch 6, **dadurch gekennzeichnet, dass** die Wheatstonesche Brücke zwei Widerstände in einem unter Druckspannung stehenden Bereich (12b, 13a) und zwei weitere Widerstände in einem unter Zugspannung stehenden Bereich (12a, 13b) aufweist.

8. Schraube nach Anspruch 6, **dadurch gekennzeichnet, dass** die Wheatstonesche Brücke einen ersten Widerstand in einem unter Druckspannung stehenden Bereich, einen zweiten Widerstand in einem unter Zugspannung stehenden Bereich, und zwei weitere Widerstände in einem dehnungsarmen Bereich aufweist.

9. Schraube nach einem der vorherigen Ansprüche, **dadurch gekennzeichnet, dass** eine Schwinge (22, 24) zur Krafteinleitung vorgesehen ist.

10. Schraube nach Anspruch 9, **dadurch gekennzeichnet, dass** mit der Schwinge eine Gelenkpfanne (25) zur Entkopplung der Momente vorgesehen ist.

11. Schraube nach einem der vorherigen Ansprüche, **dadurch gekennzeichnet, dass** am Bolzen ein Abstandsring (20) vorgesehen ist, der zur Kraftbegrenzung dient.

12. Schraube nach Anspruch 1, **dadurch gekennzeichnet, dass** zumindest eine Fügestelle in der Schraube zur Verbindung vorgesehen ist.

13. Schraube nach Anspruch 12, **dadurch gekennzeichnet, dass** bei zwei Fügestellen die Fügestellen zueinander versetzt sind.

14. Schraube nach einem der vorherigen Ansprüche, **dadurch gekennzeichnet, dass** die Schraube derart ausgebildet ist, dass nach innenzeigende Freiräume (200) ausgebildet sind, um dehnungssensitive Bereiche in der Membran (3) zu definieren.

15. Schraube nach Anspruch 14, **dadurch gekennzeichnet, dass** die Freiräume (200) Aushebungen sind, die kreisförmig gestaltet sind.

16. Schraube nach Anspruch 14, **dadurch gekennzeichnet, dass** die Aushebung (200) eine erste Teilkreisform (201) und eine zweite Teilkreisform (202) aufweist, wobei die erste Teilkreisform (201) zur Hülse (1) und die zweite Teilkreisform (202) zum Bolzen (2) zeigen und die erste und zweite Teilkreisform (201, 202) jeweils unterschiedlich gestaltet sind.

17. Schraube nach Anspruch 16, **dadurch gekennzeichnet, dass** die erste Teilkreisform (201) einen kleineren Radius als die zweite Teilkreisform (202) aufweist.

18. Schraube nach Anspruch 17, **dadurch gekennzeichnet, dass** die Teilkreisformen jeweils parabel- oder splineförmig gestaltet sind.

19. Schraube nach einem der Ansprüche 12 oder 13, **dadurch gekennzeichnet, dass** die Fügestellen ringförmig ausgebildet sind, um damit eine ringförmige Membran zu definieren.

20. Schraube nach einem der vorhergehenden Ansprüche, **dadurch gekennzeichnet, dass** die Membran (3) aus einem hochfesten Stahl ist.

21. Schraube nach einem der vorhergehenden Ansprüche, **dadurch gekennzeichnet, dass** die Schraube im Wesentlichenrotationssymmetrisch ist.

## Claims

1. Screw having
a bolt (2),
a diaphragm which in the centre is held by the bolt and externally is encompassed by a sleeve,
on which membrane a force component to be measured is exertable transversely to the longitudinal direction of the bolt (2), wherein
the sleeve (1) is spaced apart from the bolt (2) in such a manner that the diaphragm (3) is elongated so as to depend on the force component, wherein
a sensor system (14 to 16) for measuring elongation is provided on the diaphragm (3).

2. Screw according to Claim 1, **characterized in that** the screw having the bolt (2) having the diaphragm (3) and having the sleeve (1) is embodied so as to be integral.

3. Screw according to either of the preceding claims, **characterized in that** the sensor system (14 to 16) has strain gauges for measuring elongation.

4. Screw according to Claim 1, **characterized in that** the sensor system has piezoresistive elements for measuring elongation.

5. Screw according to either of Claims 3 and 4, **characterized in that** the sensor system is applied by means of thin-film technology.

6. Screw according to Claim 3, 4, or 5, **characterized in that** the sensor system has a Wheatstone bridge as an electric circuit.

7. Screw according to Claim 6, **characterized in that** the Wheatstone bridge has two resistors in a region (12b, 13a) that is under compressive stress, and two further resistors in a region (12a, 13b) that is under tensile stress.

8. Screw according to Claim 6, **characterized in that** the Wheatstone bridge has a first resistor in a region that is under compressive stress, a second resistor in a region that is under tensile stress, and two further resistors in a region of low elongation.

9. Screw according to one of the preceding claims, **characterized in that** a swinging bracket (22, 24) is provided for the transmission of force.

10. Screw according to Claim 9, **characterized in that** a joint socket (25) for decoupling the momenta is provided with the swinging bracket.

11. Screw according to one of the preceding claims, **characterized in that** an annular spacer (20) which serves for force limitation is provided on the bolt.

12. Screw according to Claim 1, **characterized in that** at least one joint patch is provided for connection in the screw.

13. Screw according to Claim 12, **characterized in that** the joint patches are mutually offset in the case of two joint patches.

14. Screw according to one of the preceding claims, **characterized in that** the screw is configured in such a manner that inwardly pointing free spaces (200) are configured so as to define elongation-sensitive regions in the diaphragm (3).

15. Screw according to Claim 14, **characterized in that** the free spaces (200) are excavations which are designed to be circular.

16. Screw according to Claim 14, **characterized in that** the excavation (200) has a first divided-circle shape (201) and a second divided-circle shape (202), wherein the first divided-circle shape (201) points towards the sleeve (1), and the second divided-circle shape (202) points towards the bolt (2), the first and the second divided-circle shape (201, 202) each being of dissimilar design.

17. Screw according to Claim 16, **characterized in that** the first divided-circle shape (201) has a smaller radius than the second divided-circle shape (202).

18. Screw according to Claim 17, **characterized in that** the divided-circle shapes each are designed to be parabolic or spline-shaped.

19. Screw according to either of Claims 12 and 13, **characterized in that** the joint patches are configured to be annular in order to thus define an annular diaphragm.

20. Screw according to one of the preceding claims, **characterized in that** the diaphragm (3) is made from a high-tensile steel.

21. Screw according to one of the preceding claims, **characterized in that** the screw is substantially rotationally symmetrical.

## Revendications

1. Vis avec
une tige (2),
une membrane, qui est maintenue au centre par la tige et qui est cerclée extérieurement par une douille,
à laquelle une composante de force à mesurer est appliquée transversalement à la direction longitudinale de la tige (2), dans laquelle
la douille (1) est espacée de la tige (2), de telle manière que la membrane (3) soit allongée en fonction de la composante de force, dans laquelle il est prévu sur la membrane (3) des capteurs (14 à 16) pour la mesure de l'allongement.

2. Vis selon la revendication 1, **caractérisée en ce que** la vis est réalisée d'une seule pièce avec la tige (2), avec la membrane (3) et avec la douille (1).

3. Vis selon l'une quelconque des revendications précédentes, **caractérisée en ce que** ces capteurs (14 à 16) présentent des jauges extensométriques pour la mesure de l'allongement.

4. Vis selon la revendication 1, **caractérisée en ce que** les capteurs présentent des éléments piézorésistifs pour la mesure de l'allongement.

5. Vis selon la revendication 3 ou 4, **caractérisée en ce que** les capteurs sont appliqués par la technique du film mince.

6. Vis selon la revendication 3, 4 ou 5, **caractérisée en ce que** ces capteurs présentent un pont de Wheatstone en tant que circuit.

7. Vis selon la revendication 6, **caractérisée en ce que** le pont de Wheatstone présente deux résistances dans une région se trouvant sous une contrainte de compression (12b, 13a) et deux autres résistances dans une région se trouvant sous une contrainte de traction (12a, 13b).

8. Vis selon la revendication 6, **caractérisée en ce que** le pont de Wheatstone présente une première résistance dans une région se trouvant sous une contrainte de compression, une deuxième résistance dans une région se trouvant sous une contrainte de traction, et deux autres résistances se trouvant dans une région à faible allongement.

9. Vis selon l'une quelconque des revendications précédentes, **caractérisée en ce qu'**il est prévu un bras oscillant (22, 24) pour l'introduction de la force.

10. Vis selon la revendication 9, **caractérisée en ce qu'**il est prévu avec le bras oscillant un coussinet à rotule (25) pour le découplage des couples.

11. Vis selon l'une quelconque des revendications précédentes, **caractérisée en ce qu'**il est prévu sur la tige une bague d'écartement (20), qui sert pour limiter la force.

12. Vis selon la revendication 1, **caractérisée en ce qu'**il est prévu au moins un point de jonction dans la vis pour l'assemblage.

13. Vis selon la revendication 12, **caractérisée en ce qu'**avec deux points de jonction, les points de jonction sont décalés l'un par rapport à l'autre.

14. Vis selon l'une quelconque des revendications précédentes, **caractérisée en ce que** la vis est configurée de telle manière que des espaces libres tournés vers l'intérieur (200) soient formés, pour définir des zones sensibles à l'allongement dans la membrane (3).

15. Vis selon la revendication 14, **caractérisée en ce que** les espaces libres (200) sont des cavités, qui sont de forme circulaire.

16. Vis selon la revendication 14, **caractérisée en ce que** la cavité (200) présente une première forme circulaire partielle (201) et une deuxième forme circulaire partielle (202), dans laquelle la première forme circulaire partielle (201) est tournée vers la douille (1) et la deuxième forme circulaire partielle (202) est tournée vers la tige (2) et la première et la deuxième formes circulaires partielles (201, 202) sont chaque fois de forme différente.

17. Vis selon la revendication 16, **caractérisée en ce que** la première forme circulaire partielle (201) présente un rayon plus petit que la deuxième forme circulaire partielle (202).

18. Vis selon la revendication 17, **caractérisée en ce que** les formes circulaires partielles sont configurées respectivement en forme de parabole ou de cannelure.

19. Vis selon une des revendications 12 ou 13, **caractérisée en ce que** les points de jonction sont réalisés sous forme annulaire, afin de définir ainsi une membrane annulaire.

20. Vis selon l'une quelconque des revendications précédentes, **caractérisée en ce que** la membrane (3) est réalisée en un acier à haute résistance.

21. Vis selon l'une quelconque des revendications précédentes, **caractérisée en ce que** la vis présente essentiellement la symétrie de révolution.
